# EUROPÄISCHE PATENTSCHRIFT

(11) **EP 3 314 310 B1**
(45) Veröffentlichungstag und Bekanntmachung des Hinweises auf die Patenterteilung: **03.11.2021**
(21) Anmeldenummer: 16729593.0
(22) Anmeldetag: 17.06.2016
(51) Int. Cl.: G01V 3/10

(54) **VORRICHTUNG UND VERFAHREN ZUR ERFASSUNG EINES GEGENSTANDES**
DEVICE AND METHOD FOR DETECTING AN ARTICLE
DISPOSITIF ET PROCÉDÉ DE DÉTECTION D'UN OBJET

(30) Priorität: 23.06.2015 DE 102015211551
(43) Veröffentlichungstag der Anmeldung: 02.05.2018
(73) Patentinhaber: Zircon Corporation, Campbell, CA 95008 (US)
(72) Erfinder: REIME, Gerd, 77815 Bühl (DE)
(74) Vertreter: Reinhardt, Harry
(86) Internationale Anmeldenummer: PCT/EP2016/064013
(87) Internationale Veröffentlichungsnummer: WO 2016/207073

(56) Entgegenhaltungen:
- DE-A1- 3 733 529
- DE-A1-102011 077 068
- US-A1- 2009 219 027
- US-A1- 2010 219 823
- US-A1- 2015 002 166
- US-A1- 2015 153 474
- US-B1- 6 541 965

## Beschreibung

Die Erfindung betrifft eine Vorrichtung sowie ein Verfahren zur Erfassung eines hinter einem für eine elektromagnetische Strahlung durchlässigen Gegenstands angeordneten Objekts mit den Merkmalen nach dem Oberbegriff der Ansprüche 1 bzw. 7.

Im Allgemeinen sind induktive Sensoren zum Auffinden eines metallischen, elektrisch leitenden Objektes in einem umgebenden Medium z.B. aus der US-A 5,729,143 bekannt.

Sensoren, die durch einen flächigen Gegenstand, beispielsweise durch eine Platte, der nicht für optische Strahlung durchlässig ist, die Anwesenheit oder Bewegung eines nicht metallischen Objektes erfassen, sind meist nach dem Prinzip der Kapazitätsmessung aufgebaut. Eine bekannte Anwendung sind z.B. kapazitive Touchpads, wie z.B. aus der DE 103 24 579 A1 bekannt, oder kapazitive Annäherungssensoren wie z.B. in der DE 101 31 243 C1 beschrieben, in der ein Sensor mit Sensorelektroden und eine zugeordnete Steuerschaltung zur Auswertung der Sensorsignale vorgesehen sind, wobei eine weitere Elektrode die Sensorelektrode umgibt. Bei diesen Anwendungen ist die Sensoreinheit fest mit der zu durchdringenden Platte verbunden und, von der Sensoreinheit aus gesehen, bewegt sich das zu erfassende Objekt hinter dieser Platte. Der Sensor und die Platte haben durch die mechanische Anordnung eine feste Kapazität zueinander, die sich im Messwert als konstante Grundkapazität widerspiegelt.

Eine weitere Anwendung sind Sensoren, die über dem flächigen Gegenstand bzw. der Platte bewegt werden müssen, um dahinter liegende Objekte zu orten, wie dies z.B. aus der EP 0 657 032 B1 und der EP 1 740 981 B1 bekannt ist. Dazu gehören die sogenannten "Balkenfinder" (Stud-Detector). Balkenfinder sind allgemeine Hilfsgeräte für Heimwerker und Profis, um z.B. in Fertighäusern hinter einer geschlossenen Holzverschalung oder Beplankung Balken, Pfosten oder Rohr- bzw. Stromleitungen zu detektieren. Dazu wird der Sensor über die Wand geführt. Er misst mittels einer Elektrode die Kapazität zur Wand. Befindet sich ein Holzbalken, eine Rohr- oder Stromleitung im Erfassungsbereich, erhöht sich durch die Veränderung des Dielektrikums die Kapazität. Diese wird entsprechend ausgewertet und dem Anwender zur Anzeige gebracht. So lange der Sensor mit exakt gleichem Abstand zum flächigen Gegenstand oder zur Platte bewegt wird, verändert sich die Kapazität zwischen Sensor und dem flächigen Gegenstand oder der Platte nicht. Sie geht wie bei den ersten beiden Beispielen nur als konstanter Wert in das Messsignal ein. Am Beispiel des Balkenfinders kann man jedoch nachvollziehen, dass das Einhalten eines konstanten Abstands in der Praxis nahezu unmöglich ist und sich daher die durch den Wandaufbau bedingte Grundkapazität in Abhängigkeit des Abstands erheblich ändert. Daher wird in der nachfolgenden Beschreibung der Erfindung auch der Balkenfinder als Ausführungsbeispiel gewählt.

Die dem Oberbegriff der unabhängigen Ansprüche zu Grunde liegende DE 10 2011 077 068 A1 betrifft eine Vorrichtung und ein Verfahren zum Detektieren eines elektrisch und/oder magnetisch leitfähigen Objektes in einer Umgebung eines Sensorkopfes, insbesondere basierend auf einem Pulsinduktionsmessprinzip.

Die US 2009/0219027 A1 beschreibt einen Multisensor zum Detektieren und Identifizieren von Blindgängern. Der Multisensor weist zumindest zwei orthogonal zueinander angeordnete Sendespulen sowie eine Vielzahl zu diesen orthogonal angeordnete Empfängerspulen auf. Die Empfängerspulen sind in zwei voneinander beabstandeten und orthogonal zu den Sendespulen verlaufenden Ebenen angeordnet, wobei die Sendespulen zwischen den Empfängerspulen angeordnet sind. Bereits dadurch ergibt sich ein Raum greifender Aufbau. Zudem sind die Spulen so angeordnet, dass sich die Spulenflächen schneiden bzw. teilweise ineinander liegen

Die US 2010/0219823 A1 zeigt ein Betriebsverfahren für eine Spulenanordnung für einen magnetischen Sensor zur Detektion metallischer Objekte in einem Untergrundmedium wie z.B. hinter oder in einer Wand. Die Anordnung weist zwei äußere Hauptspulen auf, innerhalb derer paarweise Spulenpaare symmetrisch zur Achse der Hauptspulen angeordnet sind. Zwei Paare dazu orthogonaler Spulen sind einander gegenüberliegend ebenfalls symmetrisch zur Achse der Hauptspulen vorgesehen. Viele der Sendespulen sind achsparallel in einer Ebene angeordnet.

Aus der DE 20 2004 011 921 U1 ist eine Spulenanordnung, insbesondere für ein Metallsuchgerät, bestehend aus einer Sendespule und einer zu der Sendespule orthogonal angeordneten Empfangsspule bekannt. Die Besonderheit dieser orthogonalen Anordnung besteht darin, dass die beiden Spulen so zueinander positioniert werden können, dass ohne äußere Einflüsse an der Empfangsspule keine durch die mit einem elektronischen Signal betriebene Sendespule induzierte Spannung gemessen werden kann. Ein metallisches, elektrisch leitendes Objekt im Detektionsbereich des Sensors krümmt die Feldlinien des ausgesendeten, die Empfangsspule durchdringenden elektromagnetischen Feldes, so dass eine induzierte Spannung an der Empfangsspule gemessen werden kann. Diese Spannung wird im Folgenden als Messsignal bezeichnet.

Würde beispielsweise mit einem solchen induktiven Sensor eine Stahlbewehrung in Beton detektiert, wird der Sensor an der Betonoberfläche entlang geführt. Es entsteht ein maximales Messsignal, wenn der Bewehrungsstahl einen minimalen Abstand zur Sensoranordnung hat. An den örtlichen Positionen, an denen Maxima des Messsignals entstehen, wird dementsprechend das Vorkommen eines Bewehrungsstahles interpretiert.

Wird zum Beispiel ein in Beton gegossenes Stahlbewehrungsgitter auf diese Weise mit einem induktiven Sensor gemessen, so können Wirbelströme, die durch das ausgesendete elektromagnetische Feld des induktiven Sensors in einem metallischen, elektrisch leitenden Objekt entstehen, die Messung dahingehend beeinträchtigen, dass zum Beispiel ein Minimum des Messsignals über einem Stahlbewehrungssegment des Gitters entsteht, und ein Maximum des Messsignals über den Hohlstellen in der Mitte des Gitters entsteht. Ringströme entlang der Gitterstruktur, die wie elektrische Schleifen wirken, sind für diesen Effekt verantwortlich.

Somit kann es zu Fehlinterpretationen kommen, da die räumliche Lage eines Bewehrungsstahlsegmentes an der Stelle interpretiert wird, an der ein maximales Messsignal entsteht. Im Folgenden wird die unerwünschte Entstehung von Messsignal-Maxima bzw. Messsignal-Minima, an ungünstigen Stellen eines gitterartigen metallischen, elektrisch leitenden Objekts, die zu Fehlinterpretationen führen können, als Gittereffekt bezeichnet.

Die DE 37 33 529 A1 zeigt ein induktives Metallsuchgerät mit mindestens vier Erregerspulen und zumindest einer Empfängerspule. Die vier Erregerspulen, deren Mittelpunkte auf einer geschlossenen Kreisbahn angeordnet sind, werden in einer periodischen Folge mit unterschiedlichen Strömen derart angesteuert, dass ein resultierendes Magnetfeld bei im Wesentlichen gleich bleibender Amplitude seine Richtung weitgehend kontinuierlich mit einer der genannten Folge entsprechenden Repetierfrequenz ändert. Die Erregerspulen sind entweder in einer von der Kreisbahn aufgespannten Ebene oder jeweils orthogonal zu der Ebene angeordnet.

Aus der DE 10 2010 007 620 A1 ist ein Näherungssensor mit einer ersten Sendespule, einer zweiten Sendespule, wenigstens einer Empfangsspule, einer Anregungseinrichtung, die mit der ersten und der zweiten Sendespule verbunden ist, und einer Auswerteeinrichtung, die mit zumindest einer Sendespule und/oder der Anregungseinrichtung sowie mit der wenigstens einen Empfangsspule verbunden ist, bekannt.

Die EP 1 092 988 A1 offenbart eine induktive Sensoranordnung zum Detektieren von durch ein umgebendes Medium verborgenen metallischen Objekten. Die Sensoranordnung weist zwei benachbart in einem definierten Abstand zueinander und in einer Ebene angeordnete Sendespulen und ein Paar von Empfangsspulen auf, die jeweils derartig in einem jeweiligen Feld der Sendespulen angeordnet sind, dass in diesen in einer Umgebung, die frei von eisenhaltigen Objekten ist, keine Spannung induziert wird.

Die DE 10 2009 010 943 A1 betrifft ein Betriebsverfahren und eine Spulenanordnung für einen magnetischen Sensor zur Detektion metallischer Objekte in einem Untergrundmedium mit einer ersten Hauptspule, mindestens zwei in einem Innenraum eines erweiterten Wickelzylinders der ersten Hauptspule angeordnete Spulen einer ersten Spulengruppe und mindestens zwei im Innenraum des erweiterten Wickelzylinders der ersten Hauptspule angeordnete Spulen einer zweiten Spulengruppe, die gegenüber den Spulen der ersten Spulengruppe eine andere Ausrichtung besitzen.

Ausgehend von diesem Stand der Technik liegt der vorliegenden Erfindung die Aufgabe zugrunde, eine Vorrichtung und ein Verfahren zur Verfügung zu stellen, die den Gittereffekt verringern oder gar eliminieren.

Diese Aufgabe wird durch eine Vorrichtung und ein Verfahren zur Erfassung eines hinter einem für eine elektromagnetische Strahlung durchlässigen Gegenstands angeordneten Objekts mit den Merkmalen des Anspruches 1 bzw. 7 gelöst.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Zur Lösung der Aufgabe werden die Sendespulen und Empfangsspulen orthogonal zueinander angeordnet und wechselweise in verschiedenen Konfigurationen so betrieben, dass sich durch Verrechnung der Amplitudenverläufe bestimmen lässt, ob unter der Spulenanordnung ein Gittersegment oder ein Hohlraum innerhalb der Gitterstruktur vorliegt. Durch die spezielle Anordnung und spezielle Beschaltung der Sende- und Empfangsspulen ergeben sich Vorteile für die genaue Positionsbestimmung von metallischen, elektrisch leitenden Objekten. Im Besonderen ergeben sich Vorteile bei der genauen Positionsbestimmung von metallischen, elektrisch leitenden gitterartigen Strukturen und/oder elektrisch kontaktierten Schleifen, bei denen mit bekannten induktiven Sensoren der Gittereffekt auftreten kann. Die hier beschriebene Spulenanordnung verhindert das Auftreten des Gittereffektes, sodass sowohl die Position einzelner metallischer, elektrisch leitender Objekte sowie gitterartiger Konstrukte bestehend aus metallischen, elektrisch leitenden Segmenten genau bestimmt werden können.

Vorzugsweise kann durch die Anwendung von zwei einander gegenüberliegende Konfigurationen der Spulen, die in der mehrere Sende- und Empfangsspulen umfassenden Spulenanordnung vorhanden sind, und Addieren der in den jeweiligen Konfigurationen ermittelten Signalamplituden ein symmetrisches Messsignal entlang eines Verfahrwegs des Sensors ermittelt werden. Werden vorteilhafterweise weitere Konfigurationen genutzt, die quer zu den ersten beiden Konfigurationen angeordnet sind, kann eine Auswertung auch quer zum Verfahrweg und damit zweidimensional erfolgen. Durch zeitliches Multiplexen mehrerer Konfigurationen können mehrere Messsignale mit nur einer Auswerteeinheit aufgenommen und verarbeitet werden.

Weitere Vorteile ergeben sich aus den Unteransprüchen und der nachfolgenden Beschreibung bevorzugter Ausführungsbeispiele.

Im Folgenden wird die Erfindung an Hand von in den beigefügten Figuren dargestellten Ausführungsbeispielen näher erläutert. Es zeigen:
- Fig. 1: eine Draufsicht auf eine einfache geometrische Spulenanordnung,
- Fig. 2: eine seitliche Durchsicht durch die Spulenanordnung gemäß Fig. 1,
- Fig. 3: eine Draufsicht auf eine gegenüber Fig. 1 vervielfältigte Spulenanordnung für zweidimensionale Verfahrwege,
- Fig. 4: eine seitliche Durchsicht durch die vervielfältigte Spulenanordnung gemäß Fig. 3,
- Fig. 5: eine parallele Ansteuerung der Sendespulen mit den Sendesignalen,
- Fig. 6: die elektronische Beschaltung der Empfangsspulen,
- Fig. 7: schematisch den entstehenden Signalverlauf beim Überfahren eines metallischen, elektrisch leitenden Gitters mit einer einfachen Spulenanordnung,
- Fig. 8: schematisch die entstehenden Signalverläufe beim Überfahren eines metallischen, elektrisch leitenden Gitters mit einer vervielfältigten Spulenanordnung für symmetrische eindimensionale Messungen,
- Fig. 9: schematisch die entstehenden Signalverläufe der vier möglichen Konfigurationen beim Überfahren eines metallischen, elektrisch leitenden Gitters mit einer vervielfältigten Spulenanordnung für symmetrische zweidimensionale Messungen,
- Fig. 10: den Zusammenhang zwischen Magnetfeldrichtung und Stromrichtung, wie sie an einem Gitter entstehen.

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen eine Vorrichtung zur Erfassung eines hinter einem für eine elektromagnetische Strahlung durchlässigen, vorzugsweise flächigen Gegenstand 12 angeordneten Objekts, bei dem es sich im Ausführungsbeispiel um ein Gittersegment 9.1 eines Bewehrungsgitters in einer Wand handelt. Die Vorrichtung ist aber ebenso geeignet, grundsätzlich Änderungen infolge eines Objekts zu erfassen, das das elektromagnetische Feld beeinflusst, das von Sendespulen durch das Wechselspannung-Sendesignal 5.1 hervorgerufen ist. Derartige Objekte können hinter beliebigen Gegenständen oder Materialien in Boden, Decke, Wand verdeckt sein.

Dazu weist die Vorrichtung eine Spulenanordnung bestehend aus mindestens einer ersten Sendespule 1.1 und einer orthogonal zur ersten Sendespule angeordneten zweiten Sendespule 1.2 sowie mindestens einer orthogonal zur ersten und zweiten Sendespule angeordneten ersten Empfangsspule 2.1 und einer orthogonal zur ersten und zweiten Sendespule angeordneten zweiten Empfangsspule 2.3 auf. Damit bildet die Spulenanordnung einen Sensor zur Detektion des Objekts bei Relativbewegung zwischen Vorrichtung und flächigem Gegenstand 12. Über eine Steuerschaltung wird die wenigstens eine Sendespule 1.1, 1.2 angesteuert und werden die Ausgangssignale des Sensors ausgewertet.

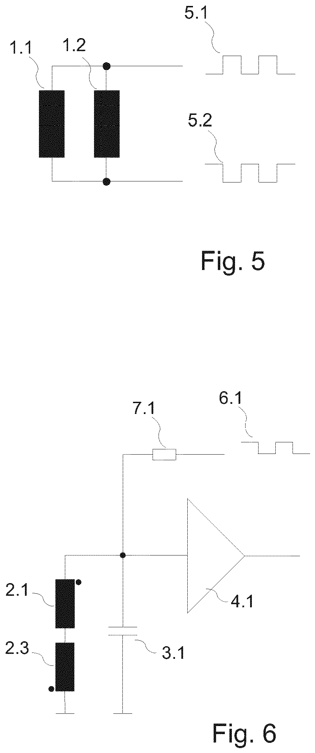

Bei den in dieser Anmeldung beschriebenen Spulen kann es sich um beliebige Spulen handeln, insbesondere um auf einer Leiterbahn aufgedruckte Spulen. Eine räumliche Lage der Spulen zueinander wird im Folgenden mittels gedachter Spulenebenen und/oder mittels gedachter Achsen der Spulen beschrieben. Die geometrischen Angaben dienen lediglich zur Verdeutlichung der Anordnung und müssen nicht exakt mathematisch ausgelegt werden. Vielmehr können diese, solange die beschriebene Wirkung und Messgenauigkeit erzielbar ist, eine gewisse Unschärfe aufweisen. Insbesondere soweit diese auf Toleranzen zurückgehen und/oder durch die in Fig. 6 beschriebene Beschaltung auf einfache Art und Weise kompensierbar sind, insbesondere im Sinne einer Eichung und/oder Justierung der Anordnung, insbesondere im Sinne einer auf elektronischem Wege erzielten virtuellen räumlichen Justierung und/oder Ausrichtung der Spulen und/oder deren Felder.

Unter einer Spulenebene kann eine gedachte Ebene verstanden werden, die orthogonal zu einem in einem Auge und in einem bestromten Zustand der Spule auftretenden mittleren Fluss steht, wobei der mittlere Fluss insbesondere durch einen Mittelpunkt des Auges verläuft.

Unter einer Achse der Spule kann eine durch das Auge hindurch, durch den mittleren Fluss und in Richtung des mittleren Flusses verlaufende Gerade verstanden werden. Die gedachte Achse steht also orthogonal zur jeweiligen gedachten Spulenebene. Insbesondere kann unter einer Richtung eines von einer Spule erzeugten Feldes die Richtung des im Auge auftretenden mittleren Flusses verstanden werden. Je nach Bestromung sind also zwei um 180° entgegengesetzte Richtungen entlang der gedachten Achse denkbar.

Im Falle einer Spule mit einer runden Wicklung, verlaufen die gedachte Achse und die gedachte Spulenebene durch einen Mittelpunkt eines von der Wicklung begrenzten und das Auge der Spule ausmachenden Kreises beziehungsweise Kreiszylinders.

Im Falle einer aufgedruckten Spule kann eine durch eine Oberfläche, auf der die Spule aufgedruckt ist, aufgespannte Ebene unter der Spulenebene verstanden werden, wobei das Auge einer solchen Spule zweidimensional angenommen werden kann und ebenfalls auf der Oberfläche liegt.

Unter dem Auge der Spule kann bei einer flächigen Spule eine von der Wicklung umschlossene Fläche oder bei einer räumlich ausgedehnten Spule ein von der Wicklung umschlossener Körper verstanden werden.

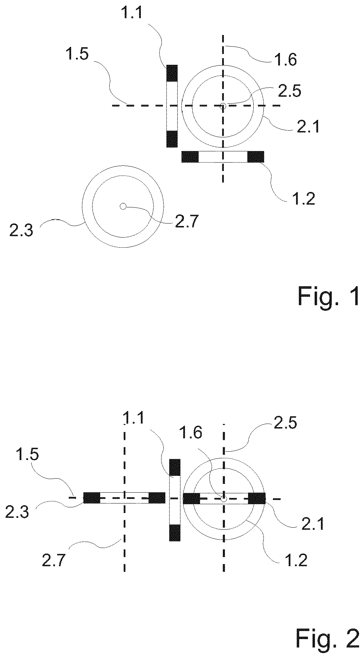

Gemäß Fig. 1, 2 stehen die Achsen 1.5, 1.6 der ersten und zweiten Sendespule 1.1, 1.2 orthogonal zueinander und schneiden die Achse 2.5 der ersten Empfangsspule 2.1 idealerweise in einem Punkt, orthogonal. Die Achsen 1.5, 1.6 der Sendespulen liegen also in der Ebene, in der die Empfangsspulen 2.1, 2.2, 2.3, 2.4 angeordnet sind. Der Abstand zwischen der zweiten Sendespule 1.2 und der ersten Empfangsspule 2.1 ist gleich groß wie der Abstand zwischen erster Sendespule 1.1 und der ersten Empfangsspule 2.1. Diese Abstände werden möglichst klein gewählt. Bei einem in den Fig. 1 und 2 nicht gezeigten Ausführungsbeispiel sind die Achsen 1.5, 1.6 der ersten und zweiten Sendespule 1.1, 1.2 orthogonal windschief zueinander angeordnet und schneiden die Achse 2.5 der ersten Empfangsspule 2.1 in zwei Punkten, jeweils orthogonal.

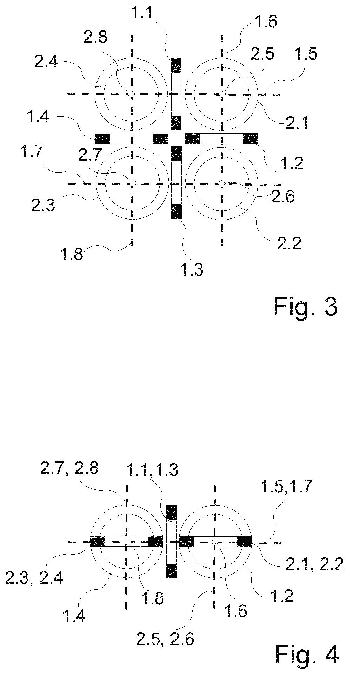

Werden weitere Sendespulen als dritte Sendespule 1.3 und vierte Sendespule 1.4 vorgesehen, verlaufen gemäß Fig. 3, 4 die Achsen 1.5, 1.7 der ersten Sendespule 1.1 und dritten Sendespule 1.3 und die Achsen 1.6, 1.8 der zweiten Sendespule 1.2 und vierten Sendespule 1.4 jeweils parallel zueinander. Die Achsen 1.5, 1.6, 1.7, 1.8 von in der Draufsicht gemäß Fig. 3 benachbarten Sendespulen 1.1, 1.2, 1.3, 1.4 stehen orthogonal zueinander und schneiden die zu den Achsen 1.5, 1.6, 1.7, 1.8 der Sendespulen 1.1, 1.2, 1.3, 1.4 orthogonalen Achsen 2.5, 2.6, 2.7, 2.8 der jeweils zwischen zwei der Sendespulen 1.1, 1.2, 1.3, 1.4 angeordneten Empfangsspulen 2.1, 2.2, 2.3, 2.4 idealerweise in einem Punkt, insbesondere in zwei Punkten, falls die Achsen 1.5, 1.6, 1.7, 1.8 der jeweiligen Sendespule 1.1, 1.2, 1.3, 1.4 windschief orthogonal zueinander angeordnet sind. So sind z.B. die erste Sendespule 1.1 und die vierte Sendespule 1.4 einander benachbart und schließen zwischen sich die vierte Empfangsspule 2.4 ein. Damit stehen die erste Sendespule 1.1 und die vierte Sendespule 1.4, beziehungsweise deren Achsen 1.5 und 1.8 orthogonal zueinander und schneiden die zu den Achsen 1.5, 1.6, 1.7, 1.8 der Sendespulen 1.1, 1.2, 1.3, 1.4 orthogonale Achse 2.8 der zwischen diesen Sendespulen 1.1 und 1.4 angeordneten Empfangsspule 2.4 idealerweise in einem Punkt. Auch hier liegen also die Achsen 1.5, 1.6, 1.7, 1.8 der Sendespulen 1.1, 1.2, 1.3, 1.4 in der Ebene, in der die Empfangsspulen 2.1, 2.2, 2.3, 2.4 angeordnet sind. Aber auch die Abstände, insbesondere innerhalb der unten noch erläuterten Konfigurationen der Spulenanordnung, zwischen den zusammenwirkenden Sendespulen und den zugeordneten Empfangsspulen sind gleich groß und werden möglichst klein gewählt.

In einem gedachten kartesischen Koordinatensystem der Spulenanordnung gemäß Fig. 3, dessen Ursprung in der Mitte zwischen den Empfangsspulen 2.1, 2.3 liegt und dessen Z-Achse in Richtung des zu detektierenden Objektes zeigt, liegen die Empfangsspulen 2.1, 2.2, 2.3, 2.4 in der XY-Ebene. Liegt die erste Sendespule 1.1 beispielsweise in der XZ-Ebene, so liegt die zweite Sendespule 1.2 in der YZ-Ebene. Der Ursprung dieses kartesischen Koordinatensystems kann als Mittelpunkt der Spulenanordnung verstanden werden beziehungsweise diesen definieren.

Die zu detektierende Gitterstruktur liegt beim Betreiben der Spulenanordnung vorzugsweise parallel zur XY-Ebene des gedachten Koordinatensystems beziehungsweise zu der von den Empfangsspulen 2.1, 2.2, 2.3, 2.4 aufgespannten Ebene. Zum Detektieren können die Empfangsspulen 2.1, 2.2, 2.3, 2.4 der Spulenanordnung parallel zu der Gitterstruktur positioniert und entsprechend parallel dazu verschoben werden. Dadurch sind alle Empfangsspulen 2.1, 2.2, 2.3, 2.4 wie auch alle Sendespulen 1.1, 1.2, 1.3, 1.4, deren Achsen 1.5, 1.6, 1.7, 1.8 insbesondere in der XY-Ebene beziehungsweise der Ebene der Empfangsspulen 2.1, 2.2, 2.3, 2.4 liegen, gleich stark mit dem Target, also der Gitterstruktur induktiv gekoppelt.

Die Begrifflichkeit, die räumliche Anordnung und die damit verbundene elektronische Bedeutung von Sendespule und Empfangsspule kann auch getauscht werden, somit ergeben sich die gleichen Vorteile. Im Folgenden wird zur Verdeutlichung nur auf die Variante eingegangen, in der alle Empfangsspulen auf einer Ebene angeordnet sind, und die Sendespulen orthogonal zueinander angeordnet sind. Analog erfolgt die Anwendung und auch Berechnung, wenn alle Sendespulen auf einer Ebene angeordnet sind und die Empfangsspulen orthogonal dazu angeordnet sind.

Die Spulenanordnung kann wie folgt angesteuert werden, um besagte Vorteile zu erreichen:
Die erste und die zweite Sendespule werden gemäß Fig. 5 mit einem AC-Signal 5.1, 5.2 so betrieben, dass die ausgesendeten elektromagnetischen Felder der Sendespulen 1.1, 1.2 während einer halben Periode des periodischen Wechselspannungs-Sendesignals 5.1, 5.2 jeweils beide in Richtung der ersten Empfangsspule 2.1 gerichtet, bzw. während der anderen Periodenhälfte des periodischen Wechselspannungs-Sendesignals jeweils beide von der ersten Empfangsspule 2.1 weg gerichtet sind. Die Sendesignale stehen aufgrund der orthogonalen Anordnung der Sendespulen 1.1, 1.2 ebenfalls orthogonal zueinander und verlaufen in Richtung der entsprechenden Achse und damit insbesondere in Richtung der Ebene der Empfangsspule/n 2.1, 2.2, 2.3, 2.4. Die erste Empfangsspule 2.1 kann in Reihe mit der zweiten Empfangsspule 2.3 betrieben werden. Die Empfangsspulen 2.1, 2.3 werden so miteinander verschaltet, dass ein vorzugsweise homogenes elektromagnetisches Feld, das den Aufbau durchdringt, in den beiden Empfangsspulen 2.1, 2.3 einander entgegen gerichtete Spannungen erzeugt.

Parallel zu dem Empfangsspulenpaar 2.1, 2.3 kann eine Resonanzkapazität 3.1 geschaltet werden. Die Resonanzkapazität bildet zusammen mit den Empfangsspulen 2.1, 2.3 einen Schwingkreis, der das induzierte AC-Signal verstärkt und glättet.

In den Empfangsspulen induzierte Spannungen werden mittels einer geeigneten Verstärkerschaltung verstärkt und gemessen. Bei idealer geometrischer Anordnung der Spulen ist das gemessene Signal ohne die Präsenz eines metallischen, leitenden Objektes ein "Nullsignal" ohne AC-Anteile. Toleranzen, insbesondere fertigungsbedingte Toleranzen der Spulenanordnung und/oder kleinere Abweichungen der geometrischen Anordnung der Spulen zueinander können mit Hilfe eines Wechselspannungs-Kompensationssignals 6.1 mit definierter Phase und definierter Amplitude, das über eine Kompensationsimpedanz 7.1 auf den Schwingkreis gegeben wird, ausgeglichen werden.

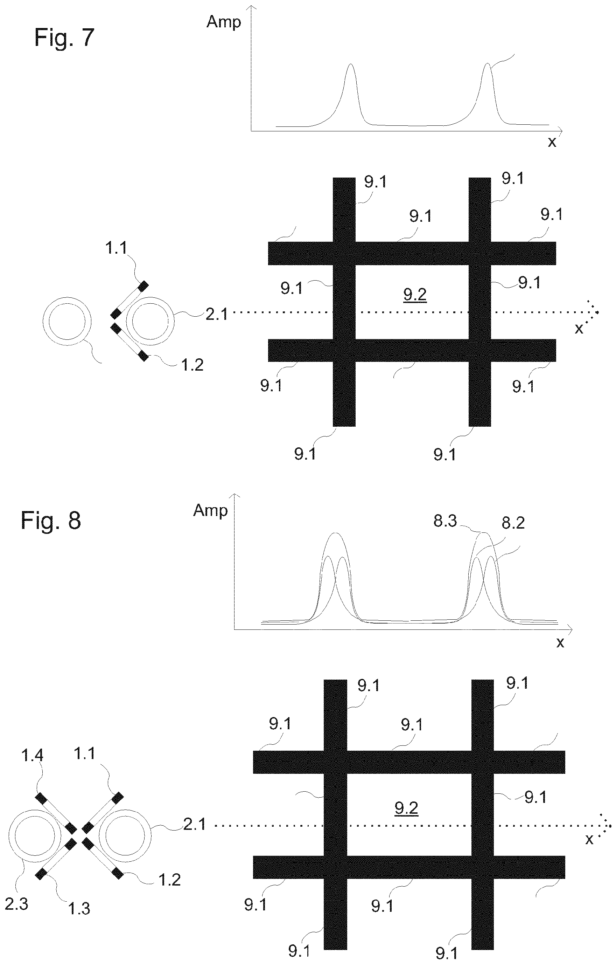

Fig. 1 zeigt die Draufsicht, Fig. 2 zeigt die seitliche Durchsicht eines einfachen Aufbaus der Spulenanordnung. Fig. 5 und Fig. 6 zeigen die dazugehörige elektrische Beschaltung der Spulen. Diese Anordnung der Komponenten mit der gezeigten Beschaltung bildet eine erste Konfiguration, die die Detektion von Gittersegmenten mit eindimensionalem Verfahrweg x gemäß Fig. 7 ermöglicht. Der Amplitudenverlauf der ersten Konfiguration 8.1, der entlang des Verfahrwegs x des Sensors parallel zu einer Gitterstruktur entsteht, ist in Fig. 7 gezeigt. Das Signal zeigt abhängig von der Geometrie des Spulensystems eine gewisse Asymmetrie.

Durch das Hinzufügen von zwei weiteren Sendespulen 1.3, 1.4 wird eine zweite Konfiguration gemäß Fig. 3, 4 ermöglicht. In dieser Konfiguration werden statt der ersten und zweiten Sendespule 1.1, 1.2 die dritte und vierte Sendespule 1.3, 1.4 mit dem Wechselspannungs-Sendesignal 5.1 betrieben. Es werden weiterhin die erste und zweite Empfangsspule 2.1, 2.3 als Empfänger genutzt. Die Amplitudenverläufe der ersten und zweiten Konfiguration 8.1, 8.2, die entlang des Verfahrwegs x des Sensors parallel zu einer Gitterstruktur entstehen, sind in Fig. 8 gezeigt. Durch Addition des ersten und zweiten Amplitudenverlaufes 8.1, 8.2 entsteht ein symmetrisches Messsignal 8.3. Durch zeitliches Multiplexen mehrerer Konfigurationen können mehrere Messsignale mit nur einer zeichnerisch nicht dargestellten Auswerteeinheit der Steuerschaltung aufgenommen werden.

Durch das Hinzufügen einer dritten und vierten Empfangsspule 2.2, 2.4 werden zwei weitere Konfigurationen ermöglicht. In der dritten Konfiguration können die zweite und dritte Sendespule 1.2, 1.3, in einer vierten Konfiguration die erste und die vierte Sendespule 1.1, 1.4 als Sender dienen, während jeweils die dritte und vierte Empfangsspule 2.2, 2.4 als Empfänger dienen. Fig. 3 zeigt eine Draufsicht auf eine solche Spulenanordnung, Fig. 4 zeigt eine seitliche Durchsicht einer solchen Spulenanordnung mit vier Sendespulen 1.1, 1.2, 1.3, 1.4 und vier Empfangsspulen 2.1, 2.2, 2.3, 2.4.

Für die erste Konfiguration sind die Achsen 1.5 und 1.6 der ersten Sendespule 1.1 und der zweiten Sendespule 1.2 orthogonal zueinander angeordnet und schneiden die Achse 2.5 der ersten Empfangsspule 2.1, insbesondere orthogonal, insbesondere idealerweise jeweils orthogonal und in einem Punkt, wie in den Ausführungsbeispielen der Fig. 1 und Fig. 3 dargestellt. Als weitere Empfangsspule weist die erste Konfiguration beispielsweise die zweite Empfangsspule 2.3 auf.

Für die zweite Konfiguration sind die Achsen 1.7 und 1.8 der dritten Sendespule 1.3 und der vierten Sendespule 1.4 orthogonal zueinander angeordnet und schneiden die Achse 2.7 der zweiten Empfangsspule 2.3, insbesondere orthogonal, insbesondere idealerweise jeweils orthogonal und in einem Punkt, wie im Ausführungsbeispiel der Fig. 3 dargestellt. Als weitere Empfangsspule weist die zweite Konfiguration beispielsweise die erste Empfangsspule 2.1 auf.

Für die dritte Konfiguration sind die Achsen 1.6 und 1.7 der zweiten Sendespule 1.2 und der dritten Sendespule 1.3 orthogonal zueinander angeordnet und schneiden die Achse 2.6 der dritten Empfangsspule 2.2, insbesondere orthogonal, insbesondere idealerweise jeweils orthogonal und in einem Punkt, wie im Ausführungsbeispiel der Fig. 3 dargestellt. Als weitere Empfangsspule weist die dritte Konfiguration beispielsweise die vierte Empfangsspule 2.4 auf.

Für die vierte Konfiguration sind die Achsen 1.8 und 1.5 der vierten Sendespule 1.4 und der ersten Sendespule 1.1 orthogonal zueinander angeordnet und schneiden die Achse 2.8 der vierten Empfangsspule 2.4, insbesondere orthogonal, insbesondere idealerweise jeweils orthogonal und in einem Punkt, wie im Ausführungsbeispiel der Fig. 3 dargestellt. Als weitere Empfangsspule weist die vierte Konfiguration beispielsweise die dritte Empfangsspule 2.2 auf.

Dieser Aufbau erlaubt das Messen der Gittersegmente bei zweidimensionalem Verfahren des Sensors parallel zu einer Gitterstruktur.

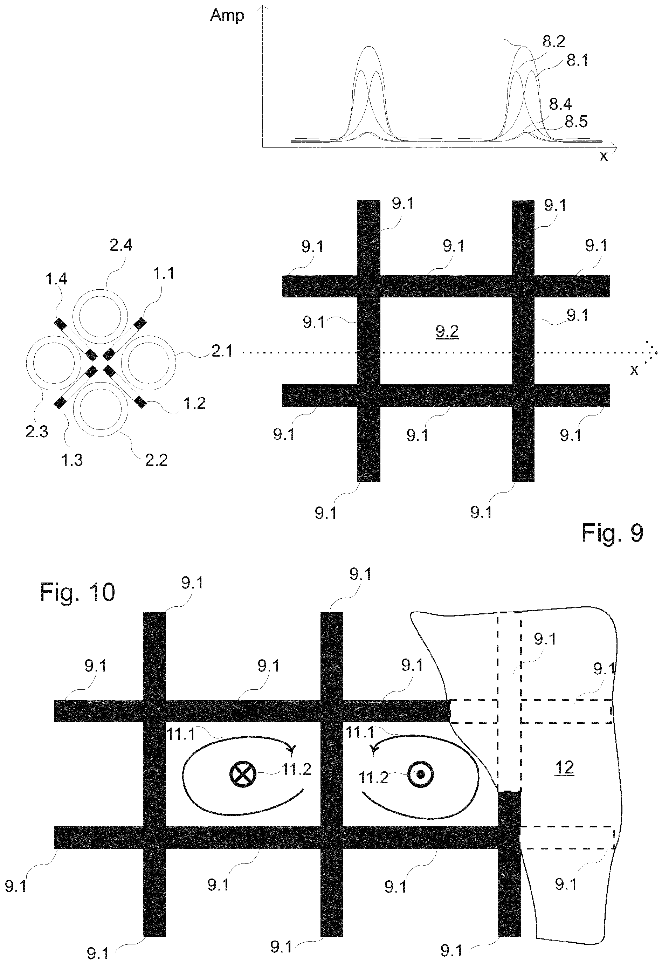

Fig. 10 zeigt einen Ausschnitt eines Gitters mit zwei geschlossenen elektrisch leitenden Segmenten, die von elektromagnetischen Feldern umgekehrter Richtung durchflossen werden. Durch die unterschiedliche Richtung der elektromagnetischen Felder bilden sich Ringströme mit unterschiedlichem Drehsinn aus. In zwei Empfangsspulen, die örtlich getrennt in den unterschiedlichen elektromagnetischen Feldern liegen werden Spannungen unterschiedlicher Polarität induziert.

Durch die in Fig. 6 gezeigte Koppelung der Empfangsspulen ist die betragsmäßige Summe der aus zwei gegenüberliegenden Konfigurationen gewonnenen Signalamplituden genau dann am größten, wenn der Mittelpunkt der Spulenanordnung genau unter einem Gittersegment 9.1 liegt, das zwei geschlossene Kreise voneinander trennt. Falls das Gittersegment eine nennenswerte flächige und/oder räumliche Ausdehnung aufweist, kann unter genau unter verstanden werden, dass der Mittelpunkt mittig unter dem Gittersegment 9.1 liegt und/oder die Z-Achse des gedachten kartesischen Koordinatensystems der Spulenanordnung das Gittersegment 9.1 mittig schneidet.

### Bezugszeichenliste

- 1.1: erste Sendespule
- 1.2: zweite Sendespule
- 1.3: dritte Sendespule
- 1.4: vierte Sendespule
- 1.5 bis 1.8: Achsen der ersten bis vierten Sendespule
- 2.1: erste Empfangsspule
- 2.3: zweite Empfangsspule
- 2.2: dritte Empfangsspule
- 2.4: vierte Empfangsspule
- 2.5 bis 2.8: Achsen der ersten bis vierten Empfangsspule
- 3.1: Resonanzkapazität
- 4.1: Verstärkerschaltung
- 5.1: Wechselspannungs-Sendesignal
- 5.2: invertiertes Wechselspannungs-Sendesignal
- 6.1: Wechselspannungs-Kompensationssignal
- 7.1: Kompensationsimpedanz
- 8.1: Amplitudenverlauf der ersten Konfiguration
- 8.2: Amplitudenverlauf der zweiten Konfiguration
- 8.3: Addition der Amplitudenverläufe der ersten und zweiten Konfiguration
- 9.1: Gittersegment
- 9.2: Hohlstellen des Gitters
- 11.1: Richtung des durch das Gitter fließenden Stromes
- 11.2: Richtung der das Gitter durchdringenden elektromagnetischen Feldlinien
- 12: Gegenstand
- x: Verfahrweg des Sensors

## Patentansprüche

1. Vorrichtung zur Erfassung eines hinter einem für eine elektromagnetische Strahlung durchlässigen Gegenstands (12) angeordneten Objekts (9.1) mit
- einer Spulenanordnung mit einer ersten Sendespule (1.1) und einer orthogonal zur ersten Sendespule angeordneten ersten Empfangsspule (2.1),
- wobei die Spulenanordnung einen Sensor zur Detektion des Objekts (9.1) bei Relativbewegung zwischen Vorrichtung und Gegenstand (12) bildet,
- einer Steuerschaltung zur Ansteuerung der wenigstens einen Sendespule (1.1) und zur Auswertung der Ausgangssignale des Sensors,
- wobei die Spulenanordnung die erste mittels der Steuerschaltung als Sendespule (1.1) angesteuerte und wenigstens eine weitere mittels der Steuerschaltung als Sendespule (1.2, 1.3, 1.4) angesteuerte sowie die erste Empfangsspule (2.1) und wenigstens eine weitere Empfangsspule (2.2, 2.3, 2.4) umfasst,
- wobei eine Achse (1.5) der ersten Sendespule (1.1) und eine Achse (1.6) der wenigstens einen weiteren Sendespule (1.2) orthogonal zueinander stehen,
- wobei die erste Sendespule (1.1) und die weitere Sendespule (1.2, 1.3, 1.4) jeweils einen gleich großen Abstand zur ersten Empfangsspule (2.1) aufweisen,
- wobei die Achse (1.5) der ersten Sendespule (1.1) und die Achse (1.6) der wenigstens einen weiteren Sendespule (1.2) eine Achse (2.5) der ersten Empfangsspule (2.1) orthogonal schneiden,
**dadurch gekennzeichnet, dass**
- die Achsen (1.5, 1.6) der Sendespulen (1.1, 1.2) in der Ebene liegen, in der die Empfangsspulen (2.1, 2.2, 2.3, 2.4) angeordnet sind.

2. Vorrichtung nach Anspruch 1, **dadurch gekennzeichnet, dass** die Achsen (1.5, 1.6) der ersten und wenigstens einen weiteren Sendespule (1.1, 1.2) die Achse (2.5) der ersten Empfangsspule (2.1) in einem Punkt schneiden.

3. Vorrichtung nach Anspruch 1 oder 2, **dadurch gekennzeichnet, dass** in einem kartesischen Koordinatensystem, dessen Ursprung in der Mitte zwischen der ersten Empfangsspule (2.1) und den weiteren Empfangsspulen (2.2, 2.3, 2.4) liegt und dessen Z-Achse in Richtung des zu detektierenden Objektes (9.1) zeigt, die Empfangsspulen (2.1, 2.2, 2.3, 2.4) in der XY-Ebene liegen, während wenigstens eine der Sendespulen (1.1) in der XZ-Ebene und wenigstens eine weitere der Sendespulen (1.2) in der YZ-Ebene liegt.

4. Vorrichtung nach einem der vorhergehenden Ansprüche, **dadurch gekennzeichnet, dass** wenigstens eine Resonanzkapazität (3.1) parallel zu der ersten Empfangsspule (2.1) und zu der wenigstens einen weiteren Empfangsspule (2.2, 2.3, 2.4) geschaltet ist, die zusammen mit den Empfangsspulen (2.1, 2.2, 2.3, 2.4) einen Schwingkreis bildet.

5. Vorrichtung nach einem der vorhergehenden Ansprüche, **dadurch gekennzeichnet, dass** die Spulenanordnung eine erste Konfiguration, umfassend die erste Sendespule (1.1) und die wenigstens eine weitere Sendespule (1.2) sowie die erste Empfangsspule (2.1) und die wenigstens eine weitere Empfangsspule (2.2, 2.3, 2.4), und eine zweite Konfiguration, umfassend wenigstens eine dritte Sendespule (1.3) und eine vierte Sendespule (1.4) sowie die erste Empfangsspule (2.1) und die wenigstens eine weitere Empfangsspule (2.2, 2.3, 2.4), aufweist, wobei die Achsen (1.7, 1.8, 1.5) der dritten und vierten Sendespule (1.3, 1.4) und der ersten Sendespule (1.1) in einer Ebene liegen, wobei die Steuerschaltung dazu bestimmt und geeignet ist, einen Amplitudenverlauf (8.1) der ersten Konfiguration mit einem Amplitudenverlauf (8.2) der zweiten Konfiguration für ein Messsignal (8.3) zu addieren, welche Amplitudenverläufe (8.1, 8.2) jeweils entlang eines Verfahrwegs (x) des Sensors bei Relativbewegung zwischen der Vorrichtung und dem Gegenstand (12) entstehen.

6. Vorrichtung nach Anspruch 5, **dadurch gekennzeichnet, dass** die Spulenanordnung wenigstens zwei weitere Empfangsspulen, nämlich eine dritte Empfangsspule (2.2) und eine vierte Empfangsspule (2.3) aufweist, und
dass die Spulenanordnung eine dritte Konfiguration, umfassend die wenigstens eine weitere Sendespule (1.2) und die dritte Sendespule (1.3) sowie die dritte Empfangsspule (2.2) und die vierte Empfangsspule (2.4), und eine vierte Konfiguration aufweist, umfassend die erste Sendespule (1.1) und eine vierte Sendespule (1.4) sowie die dritte Empfangsspule (2.2) und die vierte Empfangsspule (2.4), wobei die Achsen (1.5, 1.7, 1.8) der ersten, dritten und vierten Sendespule (1.1, 1.3, 1.4) in einer Ebene liegen, wobei die Steuerschaltung dazu bestimmt und geeignet ist, den Verfahrweg zweidimensional auszuwerten.

7. Verfahren zur Erfassung eines hinter einem für eine elektromagnetische Strahlung durchlässigen Gegenstand (12) angeordneten Objekts (9.1), wobei eine Spulenanordnung mit einer ersten Sendespule (1.1) und einer orthogonal zur ersten Sendespule angeordneten ersten Empfangsspule (2.1) vorgesehen ist und wobei die Spulenanordnung einen Sensor zur Detektion des Objekts bei Relativbewegung zwischen Vorrichtung und Gegenstand (12) bildet, wobei die wenigstens eine Sendespule (1.1) mit einem Signal angesteuert wird und wobei ein durch dieses Signal beeinflusstes Ausgangssignal des Sensors ausgewertet wird,
wobei die erste Sendespule (1.1) und wenigstens eine weitere Sendespule (1.2, 1.4) orthogonal zueinander angeordnet sind und wobei die erste Sendespule (1.1) und die weitere Sendespule (1.2, 1.3, 1.4) jeweils einen gleich großen Abstand zur ersten Empfangsspule (2.1) aufweisen und mit einem periodischen Wechselspannungs-Signal (5.1, 5.2) als Sendespulen betrieben werden,
wobei die infolge des periodischen Wechselspannungs-Signals von den Sendespulen ausgesendeten elektromagnetischen Felder während einer ersten Periodenhälfte des periodischen Wechselspannungs-Sendesignals (5.1, 5.2) jeweils in Richtung der ersten Empfangsspule (2.1) und während der zweiten Periodenhälfte des periodischen Wechselspannungs-Sendesignals jeweils von der ersten Empfangsspule (2.1) weg gerichtet sind,
wobei die erste Empfangsspule (2.1) in Reihe mit der wenigstens einen weiteren Empfangsspule (2.2, 2.3, 2.4) verschaltet und betrieben wird,
wobei ein vorzugsweise homogenes elektromagnetisches Feld, das die Spulenanordnung durchdringt, in den Empfangsspulen (2.1, 2.3; 2.2, 2.4) einander entgegen gerichtete Spannungen erzeugt, wobei die Sendespulen und Empfangsspulen so angeordnet und betrieben werden, dass
- die Achse (1.5) der ersten Sendespule (1.1) und die Achse (1.6) der wenigstens einen weiteren Sendespule (1.2) eine Achse (2.5) der ersten Empfangsspule (2.1) orthogonal schneiden, und **dadurch gekennzeichnet, dass** die Sendespulen und Empfangsspulen weiterhin so angeordnet und betrieben werden, dass
- die Achsen (1.5, 1.6) der Sendespulen (1.1, 1.2) in einer Ebene angeordnet werden, in der die Empfangsspulen (2.1, 2.2, 2.3, 2.4) angeordnet werden.

8. Verfahren nach Anspruch 7, **dadurch gekennzeichnet, dass** die Spulenanordnung eine erste Konfiguration, umfassend die erste Sendespule (1.1) und die wenigstens eine weitere Sendespule (1.2) sowie die erste Empfangsspule (2.1) und die wenigstens eine weitere Empfangsspule (2.2, 2.3, 2.4), und eine zweite Konfiguration aufweist, umfassend wenigstens eine dritte Sendespule (1.3) und eine vierte Sendespule (1.4) sowie die erste Empfangsspule (2.1) und die wenigstens eine weitere Empfangsspule (2.2, 2.3, 2.4), wobei die Achsen (1.5, 1.7, 1.8) der ersten, dritten und der vierten Sendespule (1.1, 1.3, 1.4) in einer Ebene liegen, und
dass bei Relativbewegung zwischen der Vorrichtung und dem Gegenstand (12) entlang eines Verfahrwegs (x) des Sensors ein Amplitudenverlauf (8.1), der mit der ersten Konfiguration erfasst wird, mit einem Amplitudenverlauf (8.2), der mit der zweiten Konfiguration erfasst wird, für ein Messsignal (8.3) addiert wird.

9. Verfahren nach Anspruch 8, **dadurch gekennzeichnet, dass** die Spulenanordnung wenigstens zwei weitere Empfangsspulen, nämlich eine dritte Empfangsspule (2.2) und eine vierte Empfangsspule (2.3) aufweist, und
dass die Spulenanordnung eine dritte Konfiguration, umfassend die wenigstens eine weitere Sendespule (1.2) und die dritte Sendespule (1.3) sowie die dritte Empfangsspule (2.2) und die vierte Empfangsspule (2.4), und eine vierte Konfiguration aufweist, umfassend die erste Sendespule (1.1) und eine vierte Sendespule (1.4) sowie die dritte Empfangsspule (2.2) und die vierte Empfangsspule (2.2, 2.3, 2.4), wobei die Achsen (1.5, 1.7, 1.8) der ersten, dritten und vierten Sendespule (1.1, 1.3, 1.4) in einer Ebene liegen, und
dass die Amplitudenverläufe der ersten und zweiten Konfigurationen für ein Messsignal entlang des Verfahrwegs (x) miteinander addiert werden und dass die Amplitudenverläufe der dritten und vierten Konfigurationen für ein Messsignal quer zum Verfahrweg (x) miteinander addiert werden.

10. Verfahren nach Anspruch 8 oder 9, **dadurch gekennzeichnet, dass** die betragsmäßige Summe der aus zwei der Konfigurationen, die sich gegenüberliegen, gewonnenen Amplituden genau dann am größten ist, wenn der Ursprung eines gedachten kartesischen Koordinatensystem der Spulenanordnung, der in der Mitte zwischen der ersten Empfangsspule (2.1) und den weiteren Empfangsspulen (2.2, 2.3, 2.4) liegt, dessen XY-Ebene in den Empfangsspulen (2.1, 2.2, 2.3, 2.4) liegt und dessen Z-Achse in Richtung eines zu detektierenden Gittersegments (9.1) zeigt, genau mittig über dem Gittersegment (9.1) liegt, das zwei elektrisch leitende geschlossene Kreise einer Gitterstruktur voneinander trennt.

## Claims

1. Device for detecting an object (9.1) arranged behind an article (12) that is transparent to an electromagnetic radiation, comprising
- a coil arrangement with a first transmitting coil (1.1) and a first receiving coil (2.1) arranged orthogonally to the first transmitting coil,
- wherein the coil arrangement forms a sensor for detecting the object (9.1) on a relative movement between the device and the article (12),
- a control circuit for driving the at least one transmitting coil (1.1) and for evaluating the output signals of the sensor,
- wherein the coil arrangement comprises the first transmitting coil (1.1) driven as transmitting coil by the control circuit and at least one further transmitting coil (1.2, 1.3, 1.4) driven as transmitting coil by the control circuit and the first receiving coil (2.1) and at least one further receiving coil (2.2, 2.3, 2.4),
- wherein an axis (1.5) of the first transmitting coil (1.1) and an axis (1.6) of the at least one further transmitting coil (1.2) are arranged orthogonally to one another,
- wherein the first transmitting coil (1.1) and the further transmitting coil (1.2, 1.3, 1.4) each are equally spaced apart from the first receiving coil (2.1),
- wherein the axis (1.5) of the first transmitting coil (1.1) and the axis (1.6) of the at least one further transmitting coil (1.2) intersect an axis (2.5) of the first receiving coil (2.1) orthogonally,
**characterized in that**
- the axes (1.5, 1.6) of the transmitting coils (1.1, 1.2) lie in the plane in which the receiving coils (2.1, 2.2, 2.3, 2.4) are arranged.

2. Device according to claim 1, **characterised in that** the axes (1.5, 1.6) of the first and the at least one further transmitting coil (1.1, 1.2) intersect the axis (2.5) of the first receiving coil (2.1) at one point.

3. Device according to claim 1 or 2, **characterised in that** in a Cartesian coordinate system, the origin of which lies in the middle between the first receiving coil (2.1) and the further receiving coils (2.2, 2.3, 2.4) and the Z-axis of which points in the direction of the object (9.1) to be detected, the receiving coils (2.1, 2.2, 2.3, 2.4) are arranged in the XY plane, whilst at least one of the transmitting coils (1.1) is arranged in the XZ plane and at least one further of the transmitting coils (1.2) is arranged in the YZ plane.

4. Device according to one of the preceding claims, **characterised in that** at least one resonance capacitor (3.1) is connected in parallel with the first receiving coil (2.1) and with the at least one further receiving coil (2.2, 2.3, 2.4) and together with the receiving coils (2.1, 2.2, 2.3, 2.4) forms a resonant circuit.

5. Device according to one of the preceding claims, **characterised in that** the coil arrangement has a first configuration comprising the first transmitting coil (1.1) and the at least one further transmitting coil (1.2) as well as the first receiving coil (2.1) and the at least one further receiving coil (2.2, 2.3, 2.4), and has a second configuration comprising at least a third transmitting coil (1.3) and a fourth transmitting coil (1.4) as well as the first receiving coil (2.1) and the at least one further receiving coil (2.2, 2.3, 2.4), wherein the axes (1.7, 1.8, 1.5) of the third and fourth transmitting coils (1.3, 1.4) and of the first transmitting coil (1.1) lie in one plane, wherein the control circuit is intended and adapted for adding an amplitude response (8.1) of the first configuration to an amplitude response (8.2) of the second configuration for a measurement signal (8.3), said amplitude responses (8.1, 8.2) each occurring along a movement path (x) of the sensor on a relative movement between the device and the article (12).

6. Device according to claim 5, **characterised in that** the coil arrangement comprises at least two further receiving coils, in particular a third receiving coil (2.2) and a fourth receiving coil (2.3), and
**in that** the coil arrangement has a third configuration comprising the at least one further transmitting coil (1.2) and the third transmitting coil (1.3) as well as the third receiving coil (2.2) and the fourth receiving coil (2.4), and has a fourth configuration comprising the first transmitting coil (1.1) and a fourth transmitting coil (1.4) as well as the third receiving coil (2.2) and the fourth receiving coil (2.4), wherein the axes (1.5, 1.7, 1.8) of the first, third and fourth transmitting coils (1.1, 1.3, 1.4) lie in one plane, wherein the control circuit is intended and adapted for evaluating the movement path two-dimensionally.

7. Method for detecting an object (9.1) arranged behind an article (12) that is transparent to an electromagnetic radiation, wherein a coil arrangement with a first transmitting coil (1.1) and a first receiving coil (2.1) arranged orthogonally to the first transmitting coil is provided and wherein the coil arrangement forms a sensor for detecting the object on a relative movement between the device and the article (12), wherein the at least one transmitting coil (1.1) is driven with a signal and wherein an output signal of the sensor influenced by this signal is evaluated,
wherein the first transmitting coil (1.1) and at least one further transmitting coil (1.2, 1.4) are arranged orthogonally to one another and wherein the first transmitting coil (1.1) and the further transmitting coil (1.2, 1.3, 1.4) each are equally spaced apart from the first receiving coil (2.1) and are driven with a periodic alternating voltage signal (5.1, 5.2) as transmitting coils,
wherein the electromagnetic fields emitted by the transmitting coils as a result of the periodic alternating voltage signal during a first half-period of the periodic alternating voltage transmitting signal (5.1, 5.2), are each directed in the direction of the first receiving coil (2.1) and during the second half-period of the periodic alternating voltage transmitting signal, are each directed away from the first receiving coil (2.1),
wherein the first receiving coil (2.1) is connected and operated in series with the at least one further receiving coil (2.2, 2.3, 2.4),
wherein a preferably homogeneous electromagnetic field which permeates the coil arrangement, generates mutually opposingly directed voltages in the receiving coils (2.1, 2.3; 2.2, 2.4),
wherein the transmitting coils and the receiving coils are arranged and operated in such a way, that
- the axis (1.5) of the first transmitting coil (1.1) and the axis (1.6) of the at least one further transmitting coil (1.2) intersect an axis (2.5) of the first receiving coil (2.1) orthogonally, and
**characterized in that** the transmitting coils and the receiving coils are furthermore arranged and operated in such a way, that
- the axes (1.5, 1.6) of the transmitting coils (1.1, 1.2) lie in a plane in which the receiving coils (2.1, 2.2, 2.3, 2.4) are arranged.

8. Method according to claim 7, **characterised in that** the coil arrangement has a first configuration comprising the first transmitting coil (1.1) and the at least one further transmitting coil (1.2) as well as the first receiving coil (2.1) and the at least one further receiving coil (2.2, 2.3, 2.4), and has a second configuration comprising at least a third transmitting coil (1.3) and a fourth transmitting coil (1.4) as well as the first receiving coil (2.1) and the at least one further receiving coil (2.2, 2.3, 2.4), wherein the axes (1.5, 1.7, 1.8) of the first, third and fourth transmitting coils (1.1, 1.3, 1.4) lie in one plane, and
**in that** on relative movement between the device and the article (12) along a movement path (x) of the sensor, an amplitude response (8.1) that is detected with the first configuration is added to an amplitude response (8.2) that is detected with the second configuration, for a measurement signal (8.3).

9. Method according to claim 8, **characterised in that** the coil arrangement comprises at least two further receiving coils, in particular a third receiving coil (2.2) and a fourth receiving coil (2.3), and
**in that** the coil arrangement has a third configuration comprising the at least one further transmitting coil (1.2) and the third transmitting coil (1.3) as well as the third receiving coil (2.2) and the fourth receiving coil (2.4), and has a fourth configuration comprising the first transmitting coil (1.1) and a fourth transmitting coil (1.4) as well as the third receiving coil (2.2) and the fourth receiving coil (2.2, 2.3, 2.4), wherein the axes (1.5, 1.7, 1.8) of the first, third and fourth transmitting coils (1.1, 1.3, 1.4) lie in one plane, and
**in that** the amplitude responses of the first and second configurations are added together for a measurement signal along the movement path (x) and **in that** the amplitude responses of the third and fourth configurations are added together for a measurement signal transverse to the movement path (x).

10. Method according to claim 8 or 9, **characterised in that** the quantitative sum of the amplitudes obtained from two of the configurations which lie opposing one another is greatest precisely when the origin of an imaginary Cartesian coordinate system of the coil arrangement, said origin lying in the middle between the first receiving coil (2.1) and the further receiving coils (2.2, 2.3, 2.4), the XY plane of said coordinate system lying in the receiving coils (2.1, 2.2, 2.3, 2.4) and its Z axis pointing in the direction of a grid segment (9.1) to be detected, lies exactly centrally over the grid segment (9.1) which separates two electrically conductive closed circuits of a grid structure from one another.

## Revendications

1. Dispositif pour la détection d'un objet (9.1) disposé derrière un élément (12) transparent à un rayonnement électromagnétique, comportant
- un agencement de bobines ayant une première bobine d'émission (1.1) et une première bobine de réception (2.1) disposée perpendiculairement à la première bobine d'émission,
- dans lequel l'agencement de bobines forme un détecteur pour la détection de l'objet (9.1) par déplacement relatif entre le dispositif et l'élément (12),
- un circuit de commande pour la commande de la ou des bobine(s) d'émission (1.1) et pour l'exploitation des signaux de sortie du détecteur,
- dans lequel l'agencement de bobines comprend la première bobine commandée au moyen d'un circuit de commande en tant que bobine d'émission (1.1) et au moins une autre bobine commandée au moyen du circuit de commande en tant que bobine d'émission (1.2, 1.3, 1.4) ainsi que la première bobine de réception (2.1) et au moins une autre bobine de réception (2.2, 2.3, 2.4),
- dans lequel un axe (1.5) de la première bobine d'émission (1.1) et un axe (1.6) de l'autre ou des autres bobine(s) d'émission (1.2) sont perpendiculaires l'un à l'autre,
- dans lequel la première bobine d'émission (1.1) et l'autre bobine d'émission (1.2, 1.3, 1.4) présentent chacune une même distance par rapport à la première bobine de réception (2.1),
- dans lequel l'axe (1.5) de la première bobine d'émission (1.1) et l'axe (1.6) de l'autre ou des autres bobine(s) d'émission (1.2) coupent perpendiculairement un axe (2.5) de la première bobine de réception (2.1),
**caractérisé en ce que**
- les axes (1.5, 1.6) des bobines d'émission (1.1, 1.2) se situent dans le plan dans lequel sont disposées les bobines de réception (2.1, 2.2, 2.3, 2.4).

2. Dispositif selon la revendication 1, **caractérisé en ce que** les axes (1.5, 1.6) de la première et d'au moins une autre bobine d'émission (1.1, 1.2) coupent l'axe (2.5) de la première bobine de réception (2.1) en un point.

3. Dispositif selon la revendication 1 ou 2, **caractérisé en ce que**, dans un système de coordonnées cartésiennes, dont l'origine est au milieu entre la première bobine de réception (2.1) et l'autre bobine de réception (2.2, 2.3, 2.4) et dont l'axe Z est pointé en direction de l'objet à détecter (9.1), les bobines de réception (2.1, 2.2, 2.3, 2.4) sont dans le plan XY, tandis qu'au moins l'une des bobines d'émission (1.1) se trouve dans le plan XZ et au moins une autre des bobines d'émission (1.2) se situe dans le plan YZ.

4. Dispositif selon l'une des revendications précédentes, **caractérisé en ce qu'**au moins un condensateur de résonance (3.1) est connecté en parallèle avec la première bobine de réception (2.1) et l'autre ou les autres bobine(s) de réception (2.2, 2.3, 2.4), laquelle/lesquelles forme(nt) avec les bobines de réception (2.1, 2.2, 2.3, 2.4) un circuit oscillant.

5. Dispositif selon l'une ou plusieurs des revendications précédentes, **caractérisé en ce que** l'agencement de bobines présente une première configuration comprenant la première bobine d'émission (1.1) et l'autre ou les autres bobine(s) d'émission (1.2) ainsi que la première bobine de réception (2.1) et l'autre ou les autres bobine(s) de réception (2.2, 2.3, 2.4), et une deuxième configuration comprenant au moins une troisième bobine d'émission (1.3) et une quatrième bobine d'émission (1.4) ainsi que la première bobine de réception (2.1) et l'autre ou les autres bobine(s) de réception (2.2, 2.3, 2.4), les axes (1.7, 1.8, 1.5) des troisième et quatrième bobines d'émission (1.3, 1.4) et de la première bobine d'émission (1.1) se trouvant dans un plan, le circuit de commande étant destiné et apte à additionner une évolution d'amplitude (8.2) de la première configuration à une évolution d'amplitude (8.2) de la deuxième configuration pour l'obtention d'un signal de mesure (8.3), lesquelles évolutions d'amplitude (8.1, 8.2) naissant chacune le long d'un chemin de progression (x) du détecteur lors d'un déplacement relatif entre le dispositif et l'élément (12).

6. Dispositif selon la revendication 5, **caractérisé en ce que** l'agencement de bobines présente au moins deux autres bobines de réception, notamment une troisième bobine de réception (2.2) et une quatrième bobine de réception (2.3) et **en ce que** l'agencement de bobines présente une troisième configuration comprenant l'autre ou les autres bobine(s) d'émission (1.2) et la troisième bobine d'émission (1.3) ainsi que la troisième bobine de réception (2.2) et la quatrième bobine de réception (2.4), et une quatrième configuration comprenant la première bobine d'émission (1.1) et une quatrième bobine d'émission (1.4) ainsi que la troisième bobine de réception (2.2) et la quatrième bobine de réception (2.4), les axes (1.5, 1.7, 1.8) des première, troisième et quatrième bobines d'émission (1.1, 1.3, 1.4) étant dans un plan, le circuit de commande étant destiné et apte à exploiter bi-dimensionnellement le chemin de progression.

7. Procédé de détection d'un objet disposé (9.1) disposé derrière un élément (12) transparent à un rayon électromagnétique, dans lequel un agencement de bobines est prévu avec une première bobine d'émission (1.1) et une première bobine de réception (2.1) disposée perpendiculairement à la première bobine d'émission et dans lequel l'agencement de bobines forme un détecteur pour la détection de l'objet par déplacement relatif entre le dispositif et l'élément (12), dans lequel la ou les bobine(s) d'émission (1.1) est/sont commandée(s) avec un signal et dans lequel un signal de sortie du détecteur influencé par ce signal est exploité,
dans lequel la première bobine d'émission (1.1) et l'autre ou les autres bobine(s) d'émission (1.2, 1.4) sont disposées perpendiculairement l'une à l'autre et dans lequel la première bobine d'émission (1.1) et l'autre bobine d'émission (1.2, 1.3, 1.4) présentent chacune une même distance par rapport à la première bobine de réception (2.1) et sont actionnées par un signal de tension alternative (5.1, 5.2) périodique en tant que bobines d'émission,
dans lequel les champs électromagnétiques émis par les bobines d'émission suite au signal de tension alternative périodique sont dirigés, pendant une première demi-période du signal d'émission de tension alternative (5.1, 5.2) périodique, vers la première bobine de réception (2.1) et, pendant la deuxième demi-période du signal d'émission de tension alternative périodique, en s'éloignant de la première bobine de réception (2.1),
dans lequel la première bobine de réception (2.1) est connectée et actionnée en série avec l'autre ou les autres bobine(s) de réception (2.2, 2.3, 2.4),
dans lequel un champ électromagnétique de préférence homogène, qui traverse l'agencement de bobines, produit dans les bobines de réception (2.1, 2.3 ; 2.2, 2.4) des tensions opposées l'une à l'autre,
dans lequel les bobines d'émission et les bobines de réception sont disposées et actionnées de telle manière que
- l'axe (1.5) de la première bobine d'émission (1.1) et l'axe (1.6) de l'autre ou des autres bobine(s) d'émission (1.2) coupent perpendiculairement un axe (2.5) de la première bobine de réception (2.1),
et en ce que les bobines d'émission et les bobines de réception sont en outre disposées et actionnées de sorte que
- les axes (1.5, 1.6) des bobines d'émission (1.1, 1.2) sont disposés dans un plan, dans lequel les bobines de réception (2.1, 2.2, 2.3, 2.4) sont disposées.

8. Procédé selon la revendication 7, **caractérisé en ce que** l'agencement de bobines présente une première configuration, comprenant la première bobine d'émission (1.1) et l'autre ou les autres bobine(s) d'émission (1.2) ainsi que la première bobine de réception (2.1) et l'autre ou les autres bobine(s) de réception (2.2, 2.3, 2.4) et une deuxième configuration, comprenant au moins une troisième bobine d'émission (1.3) et une quatrième bobine d'émission (1.4) ainsi que la première bobine de réception (2.1) et l'autre ou les autres bobine(s) de réception (2.2, 2.3, 2.4), les axes (1.5, 1.7, 1.8) des première, troisième et quatrième bobines d'émission (1.1, 1.3, 1.4) se trouvant dans un plan, et
**en ce que** lors d'un déplacement relatif entre le dispositif et l'élément (12) le long d'un chemin de progression (x) du détecteur, une évolution d'amplitude (8.1), qui est détectée avec la première configuration, est additionnée à une évolution d'amplitude (8.2), qui est détectée par la deuxième configuration, pour l'obtention un signal d'un mesure (8.3).

9. Procédé selon la revendication 8, **caractérisé en ce que** l'agencement de bobines comprend au moins deux autre bobines de réception, notamment une troisième bobine de réception (2.2) et une quatrième bobine de réception (2.3) et **en ce que** l'agencement de bobines présente une troisième configuration comprenant l'autre ou les autres bobines d'émission (1.2) et la troisième bobine d'émission (1.3) ainsi que la troisième bobine de réception (2.2) et la quatrième bobine de réception (2.4), et une quatrième configuration, comprenant la première bobine d'émission (1.1) et une quatrième bobine d'amission (1.4) ainsi que la troisième bobine de réception (2.2) et la quatrième bobine de réception (2.2, 2.3, 2.4), les axes (1.5, 1.7, 1.8) des première, troisième et quatrième bobines d'émission (1.1, 1.3, 1.4) se trouvant dans un plan et **en ce que** les évolutions d'amplitude des première et deuxième configurations sont additionnées l'une à l'autre le long du chemin de progression (x) pour l'obtention d'un signal de mesure et **en ce que** les évolutions d'amplitude des troisième et quatrième configurations sont additionnées l'une à l'autre perpendiculairement au chemin de progression (x) pour l'obtention d'un signal de mesure.

10. Procédé selon la revendication 8 ou 9, **caractérisé en ce que** la somme des valeurs des amplitudes obtenues à partir de deux des configurations qui sont opposées est alors précisément au plus haut, lorsque l'origine d'un système imaginaire de cordonnées cartésiennes de l'agencement de bobines, qui se trouve au milieu entre la première bobine de réception (2.1) et les autres bobines de réception (2.2, 2.3, 2.4), dont le plan XY se situe dans les bobines de réception (2.1, 2.2, 2.3, 2.4) et dont l'axe Z est pointé en direction d'un segment de grille à détecter (9.1), se trouve précisément au milieu au-dessus du segment de grille (9.1) qui sépare l'un de l'autre deux circuits conducteurs électriques fermés d'une structure de grille.
